# EUROPEAN PATENT SPECIFICATION

(11) **EP 3 015 211 B1**
(45) Date of publication and mention of the grant of the patent: **13.12.2017**
(21) Application number: 15190113.9
(22) Date of filing: 16.10.2015
(51) Int. Cl.: B23K 9/00, B23K 9/04, B23K 9/23, F01D 5/14, F01D 5/18, F23R 3/00, B23K 101/00, B23K 101/04

(54) **METHOD OF FORMING TUBULATORS ON A TURBOMACHINE SURFACE USING BUILD-UP WELDING AND CORRESPONDING TURBOMACHINE**
VERFAHREN ZUR HERSTELLUNG VON TURBULATOREN AN EINER TURBOMASCHINENOBERFLÄCHE DURCH AUFTRAGSCHWEISSEN UND ENTSPRECHENDE TURBOMASCHINE
PROCÉDÉ DE FORMATION SUR UNE SURFACE DE TURBOMACHINE PAR SOUDAGE PAR RECHARGEMENT ET TURBOMACHINE CORRESPONDANTE

(30) Priority: 24.10.2014 US 201414522824
(43) Date of publication of application: 04.05.2016
(73) Proprietor: General Electric Company, Schenectady, NY 12345 (US)
(72) Inventor: LIN, Dechao, Greenville, SC South Carolina 29615 (US); CHEN, Wei, Greenville, SC South Carolina 29615 (US); DIAO, Xiaoxue, Greenville, SC South Carolina 29615 (US); DIMASCIO, Paul Stephen, Greenville, SC South Carolina 29615 (US); KOTTILINGAM, Srikanth Chandrudu, Greenville, SC South Carolina 29615 (US); TOLLISON, Brian Lee, Greenville, SC South Carolina 29615 (US)
(74) Representative: Pöpper, Evamaria

(56) References cited:
- FR-A1- 2 498 965
- US-A- 6 116 016
- US-A1- 2004 131 877
- US-A1- 2009 139 291
- US-A1- 2012 060 504
- US-A1- 2012 102 916

## Description

### BACKGROUND OF THE INVENTION

The subject matter disclosed herein relates to the art of turbomachines and, more particularly, to a method of forming a plurality of turbulators on a turbomachine surface according to the preamble of claim 1 (see, for example, US2012/0060504 A1), and a turbomachine according to the preamble of claim 11 (see, for example, US6 116 016 A). Turbomachine systems, as described for example in US 6 116 016 A, typically include a turbomachine coupled to an intake system and a load. The turbomachine typically includes a compressor portion and a turbine portion. An airstream passes through the intake system into the compressor portion. The compressor portion forms a compressed air stream that is introduced into the turbine portion. In a gas turbomachine, a portion of the compressed airstream mixes with products of combustion in a combustor assembly forming a hot gas stream that is introduced into the turbine portion through a transition piece. In some cases, turbomachine gases may pass over turbulators to enhance various flow and operational characteristics. US 2012/0060504 A1 describes a method for cooling a combustor. The method includes locating a plurality of turbulators, which are solid parts, to an exterior surface of the combustion chamber, fixing the turbulators to the surface and directing fluid flow across a predetermined position. Document US 2009/0139291 A1 discloses raised aluminide strips produced by overlay welding and formed on the outer surface of a coiler drum body to prevent that winding steel strips contact the outer surface of the coiler drum. FR 2 498 965 A1 describes the production of a rough non-slip surface on a metal treat plate, especially for the traffic areas by depositing short columns of weld material. These deposits are of a sharp form.

The hot gas stream flows from a transition piece fluidically connecting the combustor assembly and the turbine portion. The hot gases passing from the transition piece flow toward a first stage of the turbine portion. The hot gases flow over a first stage nozzle prior to impacting first stage rotor blades. The first stage nozzle conditions and directs the hot gases toward the first stage rotor blades. The hot gases expand through additional stages of the turbine portion, each having associated rotor blades, before passing to an exhaust system.

The rotor blades are generally connected to a wheel which, in turn, may be connected to a shaft. Typically, the shaft is operatively connected to a load. The hot gas stream imparts a force to the rotor blades causing rotation of the shaft. The rotation of the shaft is transferred to the rotor. Thus, the turbine portion converts thermal energy from the hot gas stream into mechanical/rotational energy that is used to drive the load. The load may take on a variety of forms including a generator, a pump, an aircraft, a locomotive, or the like.

### BRIEF DESCRIPTION OF THE INVENTION

According to one aspect of an exemplary embodiment, a method of forming a plurality of turbulators on a turbomachine surface is defined in claim 1 and includes at least the steps of: depositing a portion of material on the turbomachine surface, forming a first portion of the plurality of turbulators, adding additional material to the first portion, and establishing a desired dimension of the plurality of turbulators.

According to another aspect of an exemplary embodiment, a turbomachine is defined in claim 11, and includes a compressor portion, including a compressor surface, and a turbine portion operatively connected to the compressor portion. The turbine portion includes a turbine surface. A combustor is fluidically connected to the compressor portion and the turbine portion. The combustor includes a combustor surface. At least one of the compressor surface, turbine surface, and combustor surface includes a plurality of turbulators. Each of the plurality of turbulators is formed from material deposited onto at least one of the compressor surface, turbine surface, and combustor surface.

These and other advantages and features will become more apparent from the following description taken in conjunction with the drawings.

### BRIEF DESCRIPTION OF DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 depicts a turbomachine system including a turbomachine having a surface including a plurality of turbulators formed in accordance with an exemplary embodiment;
FIG. 2 depicts a combustor liner of the turbomachine of FIG. 1 including the plurality of turbulators;
FIG. 3 depicts a first portion of a turbulator;
FIG. 4 depicts a second portion of a turbulator;
FIG. 5 depicts a third portion of a turbulator; and
FIG. 6 depicts a cross-sectional view of a turbulator formed in accordance with the present invention.

The detailed description explains embodiments of the invention, together with advantages and features, by way of example with reference to the drawings.

### DETAILED DESCRIPTION OF THE INVENTION

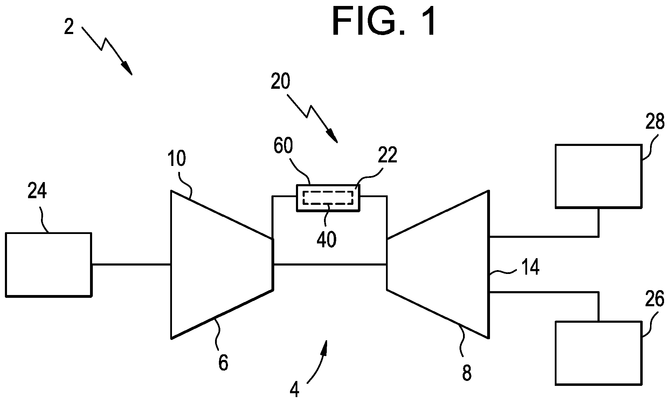

With initial reference to FIG. 1, a turbomachine system is indicated generally at 2. Turbomachine system 2 includes a turbomachine 4 having a compressor portion 6 connected to a turbine portion 8. Compressor portion 6 includes an inlet 10. Turbine portion 8 includes an outlet 14. A combustor assembly 20 fluidically connects compressor portion 6 and turbine portion 8. Combustor assembly 20 includes one or more combustors 22. Turbomachine system 2 is further shown to include an intake system 24 fluidically connected to inlet 10 and a load 26 that may be operatively connected to turbine portion 8. It should be understood that load 26 may also be connected to compressor portion 6. An exhaust system 28 is fluidically connected to outlet 14 of turbine portion 8. Exhaust system 28 receives and conditions exhaust gases passing from turbomachine 4.

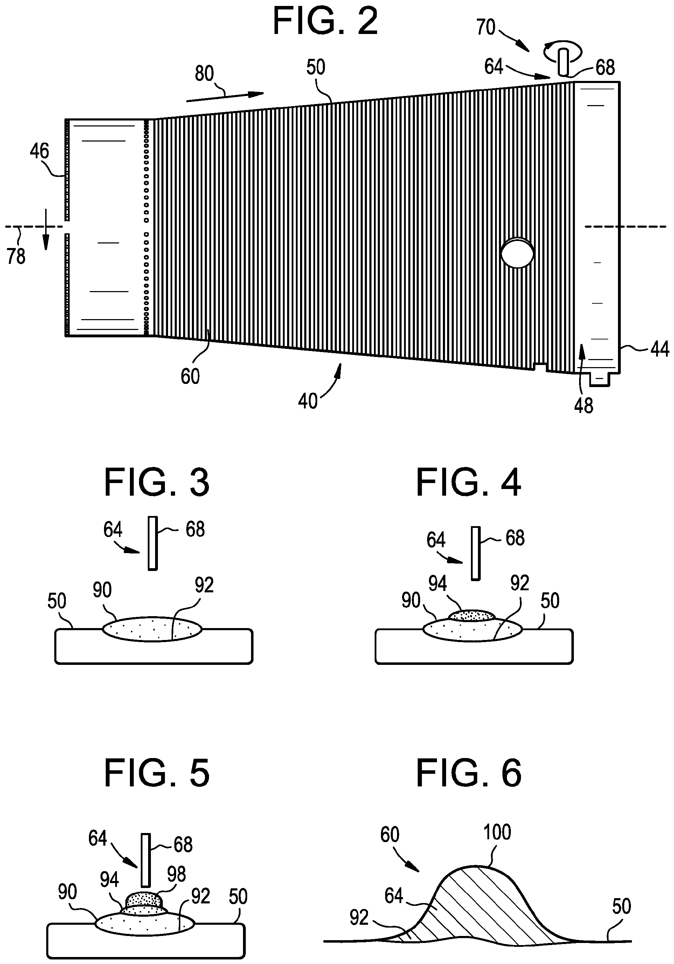

Combustor 22 includes a combustor liner 40. As shown in FIG. 2, combustor liner 40 extends from a first end 44 to a second end 46 through an intermediate portion 48 having an outer surface 50 and an inner surface (not separately labeled). A plurality of turbulators, one of which is indicated at 60, are provided on outer surface 50. Turbulators 60 circumscribe combustor liner 40 and are formed from a material 64 deposited on outer surface 50. In accordance with an aspect of an exemplary embodiment, material 64 may be similar to a material used to form combustor liner 40. Material 64 may be different from the material used to form combustor liner 40. More specifically, the particular type of material used to form turbulators 60 may vary depending upon desired flow conditioning characteristics. For example, a less expensive material having desirable material characteristics may be employed to realize a cost savings. Material 64 may be embodied in a welding electrode shown as an electrically conductive wire 68 that is deposited onto outer surface 50 through a welding process. More specifically, electrically conductive wire 68 may be a consumable electrode dispensed from a welding member shown in the form of a metal-inert-gas (MIG) gun 70 positioned proximate to outer surface 50. Alternatively, material 64 may be embodied in a non-consumable electrode such as TIG or plasma arc welding. In still further accordance with an aspect, combustor liner 40 is rotated about a first axis 78 while material 64 is deposited onto outer surface 50. After forming one of the plurality of turbulators 60, MIG gun 70 translates, along a second axis 80, to form another of the plurality of turbulators 60, as will be detailed more fully below.

Second axis 80 is angled relative to first axis 78 and generally follows an outer profile (not separately labeled) of combustor liner 40.

As shown in FIG. 3, turbulator 60 is formed by initially depositing a first portion 90 or pool of material 64 onto outer surface 50 forming a fusion interface or bond 92. A second portion 94 may be added or deposited onto first portion 90, forming a combined pool of material, as shown in FIG. 4. Of course, it should be understood that second portion 94 may not be needed depending upon a desired dimension of turbulator 60. FIG. 5 depicts a third portion or pool 98 of material 64 being combined with first portion 90 and second portion 94 to form turbulator 60. In accordance with the present invention, turbulator 60 is formed by combining one or more molten pools of material and includes a curvilinear profile 100, as shown in FIG. 6. In the embodiment shown in FIG. 6, turbulator 60 may include a height of between about 0.635 mm (0.025 inch) to about 1.524 mm (0.06 inch) and a width of about 0.762 mm (0.030 inch) to about 3.81 mm (0.150 inch). Further, curvilinear profile may have a contact angle of less than about 60°.

At this point it should be understood that the exemplary embodiments describe a method of adding one or more turbulators to a turbomachine surface. More specifically, in contrast to prior art processes in which material is removed or subtracted from a surface, the exemplary embodiments add material to a turbomachine surface to form one or more turbulators. The addition of material not only reduces or eliminates significant waste formed when employing machining techniques, but also reduces manufacturing time. Further, by adding material, the turbulators may be formed having a number of geometries previously unattainable, in a cost effective manner, through subtractive processes such as machining. It should also be appreciated that the number, size, shape and pattern of the turbulators may vary. For example, turbulator dimensions may vary depending on desired heat transfer characteristics. Further, while shown as being added to an outer surface of a combustor liner, turbulators may be formed on virtually any turbomachine surface including compressor surfaces and turbine surfaces.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method of forming a plurality of turbulators (60) on a turbomachine surface **characterized in**
depositing a portion of material on the turbomachine surface forming one of the plurality of turbulators (60), further comprising:
adding additional material (64) to the portion of material; and
establishing a desired dimension of the plurality of turbulators (60),
wherein establishing a desired dimension of the plurality of turbulators (60) includes forming a curvilinear profile (100) for each of the plurality of turbulators (60).

2. The method of claim 1, wherein depositing material (64) on the turbomachine surface includes adding material (64) to a combustor liner (40).

3. The method of any of claims 1 to 2, wherein depositing material (64) on the turbomachine surface includes translating the turbomachine surface along a first axis (78) relative to a welding member.

4. The method of claim 3, wherein translating the turbomachine surface along the first axis (78) includes rotating the turbomachine surface.

5. The method of claim 3, further comprising: translating the welding member along a second axis (80) distinct from the first axis (78).

6. The method of claim 5, wherein translating the welding member along the second axis (80) includes moving the welding member along the second axis (80) angled relative to the first axis (78).

7. The method of any of claims 1 to 6, wherein depositing material (64) on the turbomachine surface includes directing a welding electrode toward the turbomachine surface.

8. The method of any of claims 1 to 7, wherein adding the additional material (64) to the portion (90) of material includes forming another portion (94) of each of the plurality of turbulators (60) that is smaller than the portion of material.

9. The method of claim 8, further comprising: adding a third portion (98) to each of the plurality of turbulators (60) that is smaller than the second portion (94).

10. The method of any of claims 1 to 9, wherein depositing material (64) on the turbomachine surface includes depositing a material (64) that is distinct from a material forming the turbomachine surface.

11. A turbomachine (4) comprising:
a compressor portion (6) including a compressor surface;
a turbine portion (8) operatively connected to the compressor portion (6), the turbine portion (8) including a turbine surface; and
a combustor (22) fluidically connected to the compressor portion (6) and the turbine portion (8), the combustor (22) including a combustor surface,
**characterized in that** at least one of the compressor surface, turbine surface, and combustor surface includes a plurality of turbulators (60), each of the plurality of turbulators (60) being formed from material (64) deposited onto at least one of the compressor surface, turbine surface, and combustor surface, wherein each of the plurality of turbulators (60) includes a curvilinear profile (100).

12. The turbomachine (4) according to claim 11, wherein each of the plurality of turbulators (60) is formed from a material (64) that is distinct from a material forming the at least one of the compressor surface, turbine surface, and combustor surface.

## Patentansprüche

1. Verfahren zum Bilden von mehreren Turbulatoren (60) auf einer Turbomaschinenoberfläche, **gekennzeichnet durch**:
Abscheiden eines Teils eines Materials auf der Turbomaschinenoberfläche, die einen der mehreren Turbulatoren (60) bildet, ferner umfassend:
Hinzufügen von zusätzlichem Material (64) zu dem Teil des Materials; und
Einrichten einer gewünschten Abmessung der mehreren Turbulatoren (60), wobei das Einrichten einer gewünschten Abmessung der mehreren Turbulatoren (60) ein Bilden eines kurvenförmigen Profils (100) für jeden der mehreren Turbulatoren (60) umfasst.

2. Verfahren nach Anspruch 1, wobei das Abscheiden von Material (64) auf der Turbomaschinenoberfläche ein Hinzufügen von Material (64) zu einer Brennkammerauskleidung (40) umfasst.

3. Verfahren nach einem der Ansprüche 1 bis 2, wobei das Abscheiden von Material (64) auf der Turbomaschinenoberfläche ein Verschieben der Turbomaschinenoberfläche entlang einer ersten Achse (78) relativ zu einem Schweißelement umfasst.

4. Verfahren nach Anspruch 3, wobei das Verschieben der Turbomaschinenoberfläche entlang der ersten Achse (78) ein Rotieren der Turbomaschinenoberfläche umfasst.

5. Verfahren nach Anspruch 3, das ferner umfasst: Verschieben des Schweißelements entlang einer zweiten Achse (80), die sich von der ersten Achse (78) unterscheidet.

6. Verfahren nach Anspruch 5, wobei das Verschieben des Schweißelements entlang der zweiten Achse (80) ein Bewegen des Schweißelements entlang der zweite Achse (80) in einem Winkel relativ zur ersten Achse (78) umfasst.

7. Verfahren nach einem der Ansprüche 1 bis 6, wobei das Abscheiden von Material (64) auf der Turbomaschinenoberfläche ein Lenken einer Schweißelektrode zur Turbomaschinenoberfläche hin umfasst.

8. Verfahren nach einem der Ansprüche 1 bis 7, wobei das Hinzufügen des zusätzlichen Materials (64) zu dem Teil (90) des Materials ein Bilden eines weiteren Teils (94) von jedem der mehreren Turbulatoren (60), der kleiner als der Teil des Materials ist, umfasst.

9. Verfahren nach Anspruch 8, das ferner umfasst: Hinzufügen eines dritten Teils (98) zu jedem der mehreren Turbulatoren (60), der kleiner als der zweite Teil (94) ist.

10. Verfahren nach einem der Ansprüche 1 bis 9, wobei das Abscheiden von Material (64) auf der Turbomaschinenoberfläche ein Abscheiden eines Materials (64) umfasst, das sich von einem Material unterscheidet, das die Turbomaschinenoberfläche bildet.

11. Turbomaschine (4), die umfasst:
einen Kompressorteil (6) umfassend eine Kompressoroberfläche;
einen Turbinenteil (8), der mit dem Kompressorteil (6) wirkverbunden ist, wobei der Turbinenteil (8) eine Turbinenoberfläche umfasst; und
eine Brennkammer (22), die mit dem Kompressorteil (6) und dem Turbinenteil (8) fluid verbunden ist, wobei die Brennkammer (22) eine Brennkammeroberfläche umfasst,
**dadurch gekennzeichnet, dass** die Kompressoroberfläche und/oder die Turbinenoberfläche und/oder die Brennkammeroberfläche mehrere Turbulatoren (60) umfasst, wobei jeder der mehreren Turbulatoren (60) aus Material (64) gebildet ist, das auf der Kompressoroberfläche und/oder der Turbinenoberfläche und/oder der Brennkammeroberfläche abgeschieden ist, wobei jeder der mehreren Turbulatoren (60) ein kurvenförmiges Profil (100) umfasst.

12. Turbomaschine (4) nach Anspruch 11, wobei jeder der mehreren Turbulatoren (60) aus einem Material (64) gebildet ist, das sich von einem Material unterscheidet, dass die Kompressoroberfläche und/oder die Turbinenoberfläche und/oder die Brennkammeroberfläche bildet.

## Revendications

1. Procédé de formation d'une pluralité de turbulateurs (60) sur une surface de turbomachine, **caractérisé par**
le dépôt d'une portion de matériau sur la surface de turbomachine formant l'un de la pluralité de turbulateurs (60), comprenant en outre:
l'ajout de matériau supplémentaire (64) sur la portion de matériau; et
l'établissement d'une dimension souhaitée de la pluralité de turbulateurs (60), dans lequel l'établissement d'une dimension souhaitée de la pluralité de turbulateurs (60) comporte la formation d'un profil curviligne (100) pour chacun de la pluralité de turbulateurs (60).

2. Procédé selon la revendication 1, dans lequel le dépôt de matériau (64) sur la surface de turbomachine comporte l'ajout de matériau (64) à une chemise de chambre de combustion (40).

3. Procédé selon l'une quelconque des revendications 1 et 2, dans lequel le dépôt de matériau (64) sur la surface de turbomachine comporte la translation de la surface de turbomachine le long du premier axe (78) par rapport à un organe de soudage.

4. Procédé selon la revendication 3, dans lequel la translation de la surface de turbomachine le long du premier axe (78) comporte la rotation de la surface de turbomachine.

5. Procédé selon la revendication 3, comprenant en outre: la translation de l'organe de soudage le long d'un second axe (80) distinct du premier axe (78).

6. Procédé selon la revendication 5, dans lequel la translation de l'organe de soudage le long du second axe (80) comporte le déplacement de l'organe de soudage le long du second axe (80) coudé par rapport au premier axe (78).

7. Procédé selon l'une quelconque des revendications 1 à 6, dans lequel le dépôt de matériau (64) sur la surface de turbomachine comporte l'orientation d'une électrode de soudage vers la surface de turbomachine.

8. Procédé selon l'une quelconque des revendications 1 à 7, dans lequel l'ajout du matériau supplémentaire (64) à la portion (90) de matériau comporte la formation d'une autre portion (94) de chacun de la pluralité de turbulateurs (60) qui est plus petite que la portion de matériau.

9. Procédé selon la revendication 8, comprenant en outre: l'ajout d'une troisième portion (98) à chacun de la pluralité de turbulateurs (60) qui est plus petite que la deuxième portion (94).

10. Procédé selon l'une quelconque des revendications 1 à 9, dans lequel le dépôt de matériau (64) sur la surface de turbomachine comporte le dépôt d'un matériau (64) qui est distinct d'un matériau formant la surface de turbomachine.

11. Turbomachine (4) comprenant:
une portion de compresseur (6) comportant une surface de compresseur;
une portion de turbine (8) raccordée opérationnellement à la portion de compresseur (6), la portion de turbine (8) comportant une surface de turbine; et
une chambre de combustion (22) raccordée fluidiquement à la portion de compresseur (6) et à la portion de turbine (8), la chambre de combustion (22) comportant une surface de chambre de combustion,
**caractérisée en ce qu'**au moins l'une de la surface de compresseur, de la surface de turbine et de la surface de chambre de combustion comporte une pluralité de turbulateurs (60), chacun de la pluralité de turbulateurs (60) étant formé à partir d'un matériau (64) déposé sur au moins l'une de la surface de compresseur, de la surface de turbine, et de la surface de chambre de combustion, dans laquelle chacun de la pluralité de turbulateurs (60) comporte un profil curviligne (100).

12. Turbomachine (4) selon la revendication 11, dans laquelle chacun de la pluralité de turbulateurs (60) est formé à partir d'un matériau (64) qui est distinct d'un matériau formant l'au moins une de la surface de compresseur, de la surface de turbine et de la surface de chambre de combustion.
